# EUROPEAN PATENT APPLICATION

(11) **EP 1 154 365 A1**
(43) Date of publication of application: **14.11.2001**
(21) Application number: 01304142.1
(22) Date of filing: 08.05.2001
(51) Int. Cl.: G06F 17/60

(54) **Home delivery system**

(30) Priority: 10.05.2000 GB 0011172
(71) Applicant: Pace Micro Technology PLC, Shipley, West Yorkshire BD18 3LF (GB)
(72) Inventor: Steval, Michael, Shipley, BD18 3LF (GB)
(74) Representative: Wood, Graham

(57) **Abstract**

A method is provided for delivery of ordered goods to a secure location. The secure location at a premises (3) is accessed by securing means (10) which can be opened by the input of a security code. The method includes the generation of a security code at the time of ordering the goods from a retailer (5). The generated security code is communicated to the deliverer of the goods and to the securing means (10) at the secure location and input of the security code by the deliverer into the security means causes the security means to be opened and the ordered goods to be located in the secure location. The order can be placed using a broadcast data receiver (2).

## Description

The invention to which this application relates is particularly, but not necessarily exclusively, directed to the ability for a deliverer of goods which have been ordered by the occupier of a premises, to deliver the goods to the premises without the need for the occupier of the premises to be present to allow access.

With the advent of internet services, and home delivery services in general, the need for goods to be delivered to premises is increasingly commonplace. A problem which is common to all delivery procedures is that if the goods are of particular value, there is a need for the goods to be delivered when the occupier of the premises is present. There is commonly a conflict between the hours worked by the delivery service and the hours in which the occupier is in a premises such that it is commonly the case that the occupier is frequently not in when the delivery service wishes to deliver the goods. It is also known to provide secure containers on the outside of a premises into which goods may be deposited; however there is a need for the deliverer of the goods to be able to gain access to the containers to the exclusion of others.

The aim of the present invention is to provide a means of generating a security access code which allows the deliverer of goods the ability to access a secure container for the goods or other securing means of allowing the goods to be securely left at the recipients premises.

In a first aspect of the invention there is provided a method of delivery of ordered goods, said goods required to be delivered to a recipient's premises by access to a secure location for said goods via a securing means which can be opened by the input of a security code and characterised in that the security code is generated as a result of ordering the goods, said generated security code communicated to the deliverer of the goods and to the securing means at the secure location and input of the security code by the deliverer into the securing means causes the securing means to be opened and the ordered goods to be placed into and located in the secure location.

Preferably the security code is generated at the time of ordering the goods.

In a preferred embodiment, at the time of the order being made, the security code is generated and is linked exclusively to that particular order. Yet further, it is preferred that the security code will only be usable for a specified period of time after the order has been placed such as a week, two weeks, or any suitable time period. This means that if the deliverer arrives at the premises with the generated security code within a given time period then the entering of the security board into the securing means at the premises will allow the same to be opened. However, if they arrive at the premises outside the given time period, the input of the code will have no effect on the security which will reject same.

In one embodiment, the order for goods is placed over an internet or other communications link and, during the ordering process for the goods, a display or instruction is generated which includes the requirement for the person ordering the goods to enter the security code for security means at the premises. The security code can be in any required format but it is envisaged that a standard 6 digits or barcode format can be used. The orderer of the goods may be able to input their own security code but it is envisaged that for ease of use, the device often used to order the goods such as a personal computer or a broadcast data receiver can be used or set to generate a new security code automatically and this code is input and sent to the provider of the goods. Furthermore, when the security code is generated, it can either be input manually into the securing means at the premises or a communications link is provided between the securing means and PC or broadcast data receiver which allows the security code to be sent to the securing means along with data indicating the time period during which the security code can be accepted.

Preferably the securing means can include any of a cat flap, letter box, door, porch, window, shed and/or external security box.

It is envisaged that the securing means may include at any one time, more than one access security code if the user orders a number of goods and that a number of said securing codes may be live for a given period of time. In this case, the securing means is simply actuated to allow the same to be opened following receipt of any of the live security codes held in the memory of same.

In one embodiment, when a security code has expired or has been used to allow access the security code can be erased from the memory of the securing means so that the same cannot be used thereafter.

The erasing of the security code after it has been used once means that unscrupulous deliverers cannot pass the numbers onto others after they have delivered the goods to allow subsequent unauthorised access by others.

In a further aspect of the present invention there is provided a system for generating a code for the delivery of ordered goods to a secure location, said secure location accessed by securing means which can be opened by input of a security code, said system including a broadcast data receiver having a communications link to a remote retail organisation, said receiver provided with or connected to input means to allow a user to input an order for goods and said order communicated to said remote retail organisation via said communications link, characterised in that as a result of placing the order for said goods a security code is generated and communicated to the deliverer of the goods and to securing means at the secure location, so that input of the security code by the deliverer into the securing means causes the security means to be opened and the ordered goods to be placed into and located in the secure location.

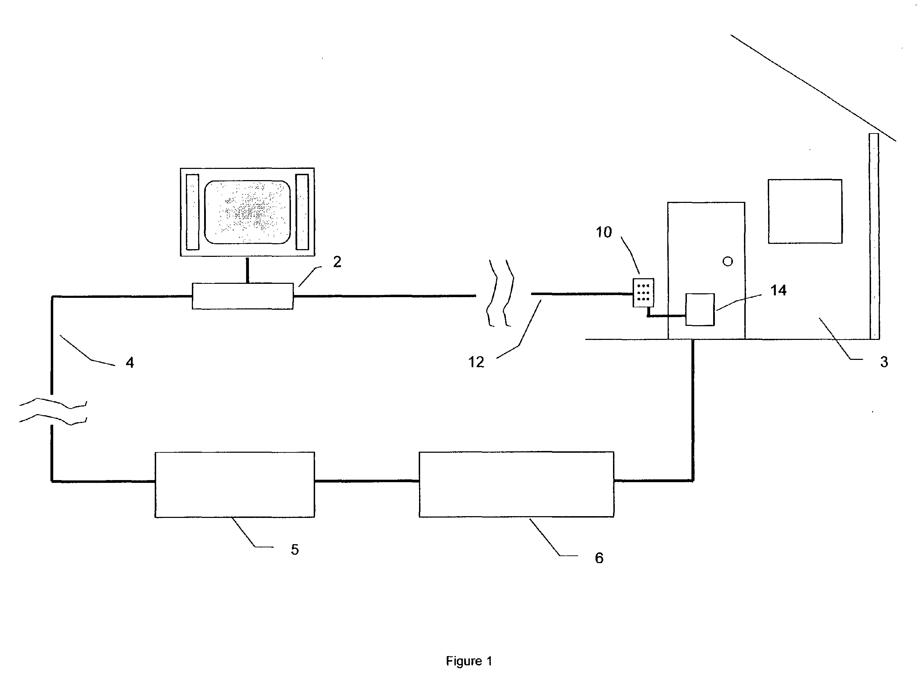

A specific embodiment of the invention is now described with reference to the accompanying drawings, wherein:-
Figure 1 illustrates the system of generating security codes and with the invention in one embodiment.

In accordance with the figure, there is shown a broadcast data receiver which could equally be a personal computer or other form of apparatus.

The broadcast data receiver 2 is provided with means to allow the input of data and is provided with a communications link 4 which allows contact with the internet or other communication system such as a telephone network. It is possible for the user of said apparatus to generate an order for goods, said order sent to a remote retail organisation 5. The recipient of the order collects the goods together into a delivery package and a delivery organisation 6 which may be separate and independent is instructed to deliver the goods to, in this case the same premises 3 in which the broadcast data receiver 2 is located although this is not always the case.

To overcome the conventional problem of the premises being inaccessible at the times when the delivery organisation wishes to deliver the goods as they wish to deliver during the day when labour costs are cheaper but at which time the recipient is commonly at work, the present invention provides a solution. At the time of placing the order via the broadcast data receiver 2, the recipient is requested to generate a security code or as in this embodiment, this is performed automatically so that the security code which is generated is unique to the particular order which is being placed. With the order placed, the details are collated by the retailer and placed onto the package or goods to be delivered. The details include the security code which is placed onto the package or accompanying documents so that the delivery organisation is aware of the security code to be entered into securing means. Furthermore, the security code is generated to be active for a particular period of time, say one week, and this will also be indicated to the delivery organisation.

Upon arrival at the premises, the deliverer can locate the securing means 10 which typically will include a keypad or other means such as a barcode reader and the deliverer can then input the security code.

It should be noted that at the same time as the order being placed and the security code being generated, the security code which has been generated is transmitted 12 to the securing means and then input into an access memory. Thus, when the deliverer enters the security code which he has and if this matches the security code held in the securing means memory, the securing means will open hence allowing the deliverer access either to the premises via, for example a delivery flap 14 in a door or window, or alternately access to a container which is external of the premises. In any embodiment however it should be appreciated that the opening of securing means and placing of goods in the required location, and subsequent locking of the securing means, allows the goods which have been delivered to be held securely and overcome the need for the recipient of the goods to be present at that time.

It is envisaged that after a period of time, the security code which has been set for a particular order will lapse so that if for whatever reason the delivery has not been made, it will no longer be possible to make the delivery with the security code which has been pre-set.

Furthermore, it is also envisaged that if the security code has been input correctly into the securing means on one occasion, the security code will be erased from the memory of the security means thereby preventing the same security code from being re-used and thus preventing the security code from being passed to unauthorised persons for subsequent use after delivery of the goods in question.

There is therefore provided in accordance with this invention means for allowing the secure delivery of goods to a premises without the need for the recipient of the goods to be present at the time of delivery.

## Claims

1. A method of delivery of ordered goods to a secure location, said secure location accessed by securing means (10) which can be opened by input of a security code **characterised in that** the method by which the ordered goods are delivered includes the generation of a security code as a result of ordering the goods, said generated security code communicated to the deliverer of the goods and to the securing means (10) at the secure location and input of the security code by the deliverer into the securing means causes the securing means to be opened and the ordered goods to be placed into and located in the secure location.

2. A method according to claim 1 **characterised in that** the security code generated at the time of a particular order being made is exclusive to that particular order.

3. A method according to claim 1 **characterised in that** the security code generated to allow access to the secure location is valid for a pre-determined period only.

4. A method according to claim 3 **characterised in that** if the security code is input after said pre-determined period of time, access to the secure location is denied.

5. A method according to claim 1 **characterised in that** the security code is generated by the retailer (5) at which the order is being made and communicated to the securing means (10) and the deliverer.

6. A method according to claim 1 **characterised in that** the security code is generated by the securing means or processor connected to the securing means (10) at the premises (3) of the secure location.

7. A method according to claim 1 **characterised in that** the order is placed over an internet or other communications link and, during the ordering process for the goods, a display or instruction is generated requiring the person placing the order to input the security code for the security means (10) at the secure location at which the goods are to be delivered thereto.

8. A method according to claim 1 **characterised in that** the security code is a plurality of digits and/or characters and/or a bar code.

9. A method according to claim 1 **characterised in that** the order is placed by the customer using a broadcast data receiver (2) or computer.

10. A method according to claim 1 **characterised in that** the security code is input manually into the securing means (10) at the secure location.

11. A method according to claim 1 **characterised in that** the security code in input into the securing means (10) at the secure location via a communications link which is provided between the security means and a computer or broadcast data receiver (2).

12. A method according to claim 1 **characterised in that** the security means (10) can store a plurality of security codes relating to a plurality of orders in memory means and that any one of said security codes can open said security means to allow access to be gained to the secure location.

13. A method according to claim 1 **characterised in that** when a pre-determined period of time has expired and/or the security code has been input into the security means (10), the security code is deleted from memory means in or connected with the security means.

14. A method according to claim 1 **characterised in that** the securing means can be located on any of a window, door, porch, cat flap, letter box, garden shed or security box.

15. A system for generating a code for the delivery of ordered goods to a secure location, said secure location accessed by securing means which can be opened by input of a security code, said system including a broadcast data receiver (2) having a communications link (4) to a remote retail organisation (5), said receiver (2) provided with or connected to input means to allow a user to input an order for goods and said order communicated to said remote retail organisation (5) via said communications link (4), **characterised in that** as a result of placing the order for said goods a security code is generated and communicated to the deliverer of the goods and to securing means at the secure location, so that input of the security code by the deliverer into the securing means causes the security means to be opened and the ordered goods to be placed into and located in the secure location.
